# EUROPÄISCHE PATENTSCHRIFT

(11) **EP 0 847 341 B1**
(45) Veröffentlichungstag und Bekanntmachung des Hinweises auf die Patenterteilung: **03.03.1999**
(21) Anmeldenummer: 96930984.8
(22) Anmeldetag: 30.08.1996
(51) Int. Cl.: B60R 11/02

(54) **AUDIOEINRICHTUNG FÜR FAHRZEUGE, INSBESONDERE FÜR KRAFTFAHRZEUGE**
AUDIO DEVICE FOR VEHICLES, ESPECIALLY MOTOR VEHICLES
SYSTEME AUDIO POUR VEHICULES, NOTAMMENT POUR AUTOMOBILES

(30) Priorität: 01.09.1995 DE 29514056 U
(43) Veröffentlichungstag der Anmeldung: 17.06.1998
(73) Patentinhaber: F + G Megamos Sicherheitselektronik GMBH, 51674 Wiehl (DE); Volkswagen Aktiengesellschaft, 38436 Wolfsburg (DE)
(72) Erfinder: WEISS, Bernd, D-51647 Gummersbach (DE)
(74) Vertreter: Schippan, Ralph, Dr.-Ing.
(86) Internationale Anmeldenummer: EP9603817
(87) Internationale Veröffentlichungsnummer: WO9709200

(56) Entgegenhaltungen:
- EP-A- 0 556 468
- EP-A- 0 635 408
- WO-A-93/23833
- DE-A- 3 723 931
- US-A- 5 349 326

## Beschreibung

Die Erfindung betrifft eine Audioeinrichtung für Fahrzeuge, insbesondere für Kraftfahrzeuge, bestehend aus einem ortsfest im Fahrzeug installierten Geräteteil und einem mechanisch lösbar damit verbundenen Mobilteil mit einem Speicher zum Speichern eines Zahlencodes sowie einer im ortsfesten Geräteteil angeordneten Steuereinheit, mittels der bei abgenommenem Mobilteil die Funktion der Audioeinrichtung unterbrochen und nach Wiedereinsetzen des Mobilteils im Anschluß an eine Berechtigungsprüfung die Funktion wiederaufgenommen wird, wobei die Steuereinrichtung für die Berechtigungsprüfung eine Vergleichereinrichtung zum Vergleich des im Mobilteil gespeicherten Zahlencodes mit dem im ortsfesten Geräteteil gespeicherten Sicherheitscode enthält,

Zum Schutz von Audioeinrichtungen, beispielsweise Autoradios, Autotelefonen u.ä. für den mobilen Einsatz gedachten Geräten, ist es bekannt, das Mobilteil elektrisch und mechanisch lösbar mit dem im Fahrzeug installierten Geräteteil zu verbinden. Wenn der Benutzer das Fahrzeug verläßt, wird beim Lösen des Mobilteils die Funktion unterbrochen. Setzt anschließend der berechtigte Benutzer das Mobilteil wieder an der vorgesehenen Stelle in das ortsfeste Geräteteil ein, wobei die entsprechenden mechanischen Kontakte die elektrische Verbindung zwischen Mobilteil und ortsfestem Gehäuseteil herstellen, wird die Funktion der Audioeinrichtung freigegeben. Die Freigabe erfolgt dabei in der Regel nach einer Prüfung, ob es sich bei dem eingesetzten Mobilteil um das des berechtigten Benutzers handelt. Bei bekannten Einrichtungen werden im Mobilteil bespielsweise integrierte Schaltkreise verwendet, die über die Verbindungsklemmen mit der notwendigen Betriebsspannung versorgt werden und deren Ausgangs- und Eingangsanschlüsse ebenfalls hierüber mit dem ortsfesten Geräteteil verbunden werden. Eine solche Verbindung wirft häufig Kontaktprobleme auf, die zu einem fehlerhaften Verhalten führen, beispielsweise dahingehend, daß die Funktion der Audioeinrichtung auch für den berechtigten Benutzer nicht wieder freigegeben wird.

Eine Audioeinrichtung der eingangs genannten Art ist aus der US 5 349 326 bekannt.

Hieraus ist eine Audioeinrichtung bekannt, welche in ihrem ortsfest im Fahrzeug installierten Geräteteil einen Speicher bestehend aus einem EEPROM enthält. Die lösbar damit verbundene Frontplatte weist einen Bedienungsbereich 9 sowie ebenfalls einen Speicher 10 auf, der zur Speicherung eines geheimen Codes dient. Darüber hinaus ist eine Auslese-Steuereinrichtung 11 zum Auslesen des geheimen Codes aus dem Speicher 10 erforderlich. Auch der Speicher 10 ist als EEPROM ebenso wie der Speicher im fest installierten Geräteteil ausgebildet.

Zur Übertragung des geheimen Codes aus dem Mobilteil in den ortsfesten Geräteteil ist eine aufwendige Elektronik bestehend aus den Blöcken 9,10,11 erforderlich.

Demgegenüber liegt der Erfindung die Aufgabe zugrunde, eine Vorrichtung der eingangs genannten Art dahingehend weiterzuentwickeln, daß einerseits der elektronische Aufwand verringert und andererseits der Zusammenbau der Einrichtung erleichtert wird. Diese Aufgabe wird erfindungsgemäß durch die Ausgestaltung der gattungsgemäßen Audioeinrichtung durch die Merkmale des kennzeichnenden Teils gelöst.

Die Erfindung zeichnet sich dadurch aus, daß eine besondere Art von Speicher verwendet wird, nämlich ein Transponder, der induktiv den für ihn charakteristischen Zahlencode in die Steuereinrichtung im fest installieren Geräteteil einspeist. Der Transponder zeichnet sich dadurch aus, daß keine weiteren Elemente erforderlich sind, um die Information aus dem Mobilteil auszulesen, da dies über die Spule des Transponders unmittelbar erfolgt. Andererseits enthält die Steuereinheit nunmehr den den Transpondercode empfangenden Demodulator, welcher die Ausgangssignale des Transponders empfängt. Durch die Anordnung von Demodulator und dem ihm nachgeschalteten Verstärker in einem kundenspezifischen Schaltkreis ASIC wird der Zusammenbau der Vorrichtung beim Hersteller erleichtert.

Die Neuerung zeichnet sich ferner dadurch aus, daß durch die Verwendung eines Transponders die Notwendigkeit für elektrische Verbindungleitungen una somit die galvanische Kopplung zwischen Mobilteil und ortsfestem Geräteteil entfällt. Bei Anregung des Transponders über entsprechende Steuermittel in der Steuerschaltung sendet dieser den für ihn charakteristischen Zahlencode aus, der mittels der Vergleichereinrichtung in der Steuereinheit mit dem in der Steuereinheit vorab gespeicherten Sicherheitscode verglichen wird. Ergibt das Ergebnis des Vergleichs eine Übereinstimmung, wird die Audioeinrichtung freigegeben bzw. bei mangelnder Übereinstimmung die Sperrung nicht aufgehoben. Aufgrund der praktisch beliebigen Sicherheitskombinationen, die durch die Wortlänge des Transpondercodes vorgegeben werden können, wird die Sicherheit für Audioeinrichtungen in Fahrzeugen, die ein hohes Diebstahlrisiko tragen, erheblich verbessert.

In einer Variante der Erfindung kann das Mobilteil mit dem Transponder Teil der Frontblende der Audioeinrichtung sein. Im Gegensatz zu anderen aus der Praxis bekannten Lösungen, bei denen die Audioeinrichtung ganz oder teilweise beim Verlassen des Fahrzeuges mitgenommen werden muß, beschränkt sich hierbei das auszubauende Teil auf einen räumlich eng begrenzten Frontblendenabschnitt.

Gemäß einer bevorzugten Ausführungsform der Erfindung ist vorgesehen, daß das Mobilteil eine maschinenlesbare Karte (Scheckkarte) im ISO-Format ist. Hierdurch wird der Transponder auf einem Träger im Format einer üblichen Scheckkarte befestigt, so daß er seinerseits als personenbezogene Identifizierung dienen kann. Hierdurch wird ermöglicht, daß der Benutzer den für ihn charakteristischen Transponder unterschiedlichen Geräten zuführen kann. Dabei kann die Scheckkarte mit dem Transponder selbst das Mobilteil bilden, ohne daß ein weiteres vom ortsfest installierten Geräteteil lösbares Teil erforderlich ist.

Weitere bevorzugte Ausführungsformen sind den nachfolgenden Unteransprüchen zu entnehmen. Insbesondere kann der Transponder ein waferprogrammierter Read-Only Transponder sein. Dieser hat den Vorteil, daß es sich dabei praktisch um ein Unikat hinsichtlich des Transpondercodes handelt, da bei dessen Herstellung der ihm eigene Code einprogrammiert wird. Ein Nachbilden dieses Codes ist aufgrund der Vielzahl der durch die digitale Zahlenfolge darstellbaren Möglichkeiten praktisch ausgeschlossen.

Die Erfindung wird im folgenden anhand einer Zeichnung näher erläutert, die ein mögliches Ausführungsbeispiel darstellt.

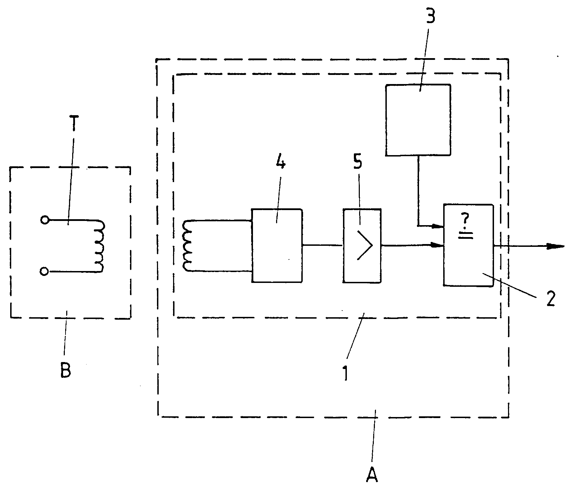

Die Zeichnung zeigt ein Blockschaltbild zur Erläuterung der wesentlichen Funktion.

Hierbei ist mit A das ortsfest im Fahrzeug installierte Geräteteil bezeichnet, innerhalb dessen eine Steuereinheit 1 vorgesehen ist, die im folgenden näher erläutert wird.

Lösbar mit dem ortsfest installierten Geräteteil A ist ein Mobilteil B verbunden, welches einen Transponder T enthält. Ortsfestes Geräteteil A und Mobilteil B sind über nicht dargestellte mechanische Mittel miteinander koppelbar.

Die Steuereinrichtung 1 enthält einen Demodulator 4 zum Empfang des vom Transponder T ausgesandten digitalen Zahlencodes. Dem Demodulator 4 nachgeschaltet ist ein Verstärker 5 und eine Vergleichereinrichtung 2, deren zweiter Eingang mit einem einen Sicherheitscode enthaltenden Speicher 3 verbunden ist. Die Komponenten Demodulator 4 und Verstärker 5 sind auf einem kundenspezifischen Schaltkreis (ASIC) untergebracht, während die Vergleichereinrichtung 2 und der Speicher 3 in einem Mikroprozessor bzw. einem nichtflüchtigen Speicher untergebracht sind.

Der Transponder T kann ein waferprogrammierter Read-Only Transponder, ein Read-Write Transponder oder ein cryptologischer Transponder sein.

Die dargestellte Anordnung arbeitet wie folgt:

Wenn das Mobilteil B aus der vorgesehenen mechanischen Halterung des ortsfesten Geräteteils A entfernt wird, wird die Funktion der Audioeinrichtung blockiert.

Setzt nun der Benutzer das Mobilteil B mit dem Transponder T in die mechanische Aufnahme im ortsfesten Geräteteil A ein, wird der Transponder T zum Aussenden der für ihn charakteristischen digitalen Zahlencodefolge veranlaßt. Diese Zahlencodefolge wird vom Demodulator 4 empfangen und demoduliert, anschließend verstärkt und in der Vergleichereinrichtung 2 mit dem vorab für den jeweiligen Transponder T typischen Sicherheitscode im Speicher 3 verglichen.

Bei Übereinstimmung beider Codes wird die Audioeinrichtung über nicht dargestellte Mittel freigegeben und bei Nichtübereinstimmung bleibt sie gesperrt.

## Patentansprüche

1. Audioeinrichtung für Fahrzeuge, insbesondere für Kraftfahrzeuge, bestehend aus einem ortsfest im Fahrzeug installierten Geräteteil (A) und einem mechanisch lösbar damit verbundenen Mobilteil (B) mit einem Speicher zum Speichern eines Zahlencodes sowie einer im ortsfesten Geräteteil angeordneten Steuereinheit (1), mittels der bei abgenommenem Mobilteil die Funktion der Audioeinrichtung unterbrochen und nach Wiedereinsetzen des Mobilteils (B) im Anschluß an eine Berechtigungsprüfung die Funktion wiederaufgenommen wird, wobei die Steuereinrichtung für die Berechtigungsprüfung eine Vergleichereinrichtung (2) zum Vergleich des im Mobilteil gespeicherten Zahlencodes mit dem im ortsfesten Geräteteil gespeicherten Sicherheitscode enthält,
**dadurch gekennzeichnet**, daß das Mobilteil (B) einen Transponder (T) aufweist und daß die Steuereinheit (1) einen kundenspezifischen Schaltkreis (ASIC) enthält, in dem ein Demodulator (4) zum Empfang des Transpondercodes und ein nachgeschalteter Verstärker integriert sind.

2. Audioeinrichtung nach Anspruch 1,
**dadurch gekennzeichnet**, daß das Mobilteil mit dem Transponder Teil der Frontblende der Audioeinrichtung ist.

3. Audioeinrichtung nach einem der vorhergehenden Ansprüche,
**dadurch gekennzeichnet**, daß das Mobilteil durch eine maschinenlesbare Karte im ISO-Format (Scheckkarte) gebildet ist.

4. Audioeinrichtung nach einem der vorhergehenden Ansprüche,
**dadurch gekennzeichnet**, daß der Transponder ein waferprogrammierter Read-Only Transponder ist.

5. Audioeinrichtung nach einem der vorhergehenden Ansprüche,
**dadurch gekennzeichnet**, daß der Transponder ein cryptologischer Transponder ist.

6. Audioeinrichtung nach einem der vorhergehenden Ansprüche,
**dadurch gekennzeichnet**, daß der Transponder ein Read-Write Transponder ist.

## Claims

1. A audio device for vehicles, especially motor vehicles, consisting of a device part (A) in a stationary installation in the vehicle and a mobile part (B) mechanically detachable connected thereto, with a memory for storing a numerical code and a control unit (1) arranged in the stationary device part by means of which the functioning of the audio device is interrupted when the mobile part is removed, and functioning is resumed after replacing the mobile part (B) following an authorization check, with the control unit having a comparator device (2) for comparing the numerical code stored in the mobile part with the security code stored in the stationary device part for the authorization check, characterized in that the mobile part (B) has a transponder (T), and the control unit (1) has a customer-specific circuit (ASIC) into which are integrated a demodulator (4) for receiving the transponder code and a downstream amplifier.

2. A audio device according to Claim 1, characterized in that the mobile part with the transponder is part of the front panel of the audio device.

3. A audio device according to one of the preceding claims, characterized in that the mobile part is formed by a machine-readable card in ISO format (check card).

4. A audio device according to one of the preceding claims, characterized in that the transponder is a wafer-programmed read-only transponder.

5. A audio device according to one of the preceding claims, characterized in that the transponder is a cryptological transponder.

6. A audio device according to one of the preceding claims, characterized in that the transponder is a read-write transponder.

## Revendications

1. Système audio pour des véhicules, notamment pour des automobiles, constitué d'une partie d'appareil (A) installée fixe dans le véhicule et d'une partie mobile (B) assemblée de façon mécaniquement détachable à la partie fixe, avec une mémoire pour mémoriser un code de chiffres et avec une unité de commande (1), qui est disposée dans la partie fixe de l'appareil et qui permet au fonctionnement du système audio d'être interrompu lorsque la partie mobile est retirée, et de reprendre à la suite de la remise en place de la partie mobile (B), après un contrôle d'autorisation, le système de commande pour le contrôle d'autorisation comprenant un dispositif comparateur (2) pour comparer le code de chiffres mémorisé dans la partie mobile au code de sécurité mémorisé dans la partie fixe de l'appareil, **caractérisé** en ce que la partie mobile (B) comporte un transpondeur (T), et en ce que l'unité de commande (1) comprend un circuit adapté aux besoins du client (circuit ASIC), dans lequel sont intégrés un démodulateur (4) pour recevoir le code du transpondeur, et un amplificateur à sa suite.

2. Système audio selon la revendication 1, **caractérisé** en ce que la partie mobile pourvue du transpondeur fait partie du panneau de façade du système audio.

3. Système audio selon une des revendications précédentes, **caractérisé** en ce que la partie mobile est constituée d'une carte détectable par machine au format ISO (carte accréditive).

4. Système audio selon une des revendications précédentes, **caractérisé** en ce que le transpondeur est un transpondeur à lecture seule, programmé par puce électronique.

5. Système audio selon une des revendications précédentes, **caractérisé** en ce que le transpondeur est un transpondeur cryptologique.

6. Système audio selon une des revendications précédentes, **caractérisé** en ce que le transpondeur est un transpondeur à lecture et écriture.
